(19) Europäisches Patentamt
European Patent Office
Office européen des brevets

(11) **EP 4 369 262 A1**

(12) **EUROPEAN PATENT APPLICATION**

(43) Date of publication:
**15.05.2024 Bulletin 2024/20**

(21) Application number: **23207783.4**

(22) Date of filing: **03.11.2023**

(51) International Patent Classification (IPC):
**G06Q 10/047** (2023.01)    **G01C 21/34** (2006.01)
**H04L 45/12** (2022.01)

(52) Cooperative Patent Classification (CPC):
**G01C 21/3446; G06Q 10/047; H04L 45/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211381804**

(71) Applicant: **HORIZON (SHANGHAI) ARTIFICIAL INTELLIGENCE TECHNOLOGY CO., LTD.**
**Shanghai 201306 (CN)**

(72) Inventor: **ZHANG, Lei**
**Shanghai, 201306 (CN)**

(74) Representative: **DehnsGermany Partnerschaft von Patentanwälten**
**Theresienstraße 6-8**
**80333 München (DE)**

(54) **SHORTEST PATH DETERMINING METHOD AND APPARATUS, ELECTRONIC DEVICE, AND STORAGE MEDIUM**

(57)    Disclosed are a method, apparatus, electronic device, and storage medium. The method includes: determining a target undirected weighted graph corresponding to a target area from a start point to a target point, which includes a plurality of nodes, edges connected between the nodes, and cost weights respectively corresponding to the edges; performing a forward search from a start node corresponding to the start point and a reverse search from a target node corresponding to the target point based on the cost weights respectively corresponding to the edges of each node, to determine an initial encounter node for the forward and reverse searches; and determining a target shortest path from the start point to the target point based on the initial encounter node. Thus, exponential growth of expansion nodes in a middle part can be avoided, reducing spatiotemporal complexity of the search and improving efficiency of determining a shortest path.

Determine a target undirected weighted graph corresponding to a target area from a start point to a target point, where the target undirected weighted graph includes a plurality of nodes, edges connected between the nodes, and cost weights respectively corresponding to the edges — 201

Perform, starting from a start node corresponding to the start point, a forward search based on the cost weights respectively corresponding to the edges of each node, and perform, starting from a target node corresponding to the target point, a reverse search based on the cost weights respectively corresponding to the edges of each node, to determine an initial encounter node for forward search and reverse search — 202

Determine a target shortest path from the start point to the target point based on the initial encounter node — 203

FIG. 2

EP 4 369 262 A1

**Description**

**RELATED APPLICATION INFORMATION**

This application claims priority to and the benefit of Chinese patent application No. 202211381804.1 filed on November 4, 2022, incorporated herein by reference.

**FIELD OF THE INVENTION**

The present disclosure relates to technologies of artificial intelligence, and in particular, to a shortest path determining method and apparatus, an electronic device, and a storage medium.

**BACKGROUND OF THE INVENTION**

In scenarios such as path design, network planning, and circuit diagram design, it is usually needed to determine a path with lowest costs (that is, a shortest path) from a start point to a target point, such as a shortest driving path from a location A to a location B in a city, a shortest route from one network node to another network node in network planning, or a shortest wiring path from one device to another device in the scenario of circuit diagram design. In related technologies, a Floyd algorithm is usually used to determine a shortest path of a dense graph. However, the Floyd algorithm has high spatiotemporal complexity, resulting in low search efficiency.

**SUMMARY OF THE INVENTION**

To resolve the foregoing technical problem of low search efficiency for a shortest path, the present disclosure is proposed. Embodiments of the present disclosure provide a shortest path determining method and apparatus, an electronic device, and a storage medium.

According to an aspect of the embodiments of the present disclosure, a shortest path determining method is provided, including: determining a target undirected weighted graph corresponding to a target area from a start point to a target point, wherein the target undirected weighted graph includes a plurality of nodes, edges connected between the nodes, and cost weights respectively corresponding to the edges; performing, starting from a start node corresponding to the start point, forward search based on the cost weights respectively corresponding to the edges of each node, and performing, starting from a target node corresponding to the target point, reverse search based on the cost weights respectively corresponding to the edges of each node, to determine an initial encounter node for the forward search and the reverse search; and determining a target shortest path from the start point to the target point based on the initial encounter node.

According to another aspect of the embodiments of the present disclosure, a shortest path determining apparatus is provided, including: a first determining module, configured to determine a target undirected weighted graph corresponding to a target area from a start point to a target point, wherein the target undirected weighted graph includes a plurality of nodes, edges connected between the nodes, and cost weights respectively corresponding to the edges; a first processing module, configured to perform, starting from a start node corresponding to the start point, a forward search based on the cost weights respectively corresponding to the edges of each node, and perform, starting from a target node corresponding to the target point, a reverse search based on the cost weights respectively corresponding to the edges of each node, to determine an initial encounter node for the forward search and the reverse search; and a second processing module, configured to determine a target shortest path from the start point to the target point based on the initial encounter node.

According to still another aspect of the embodiments of the present disclosure, a computer readable storage medium is provided, wherein the storage medium stores a computer program, and the computer program is used for implementing the shortest path determining method according to any one of the foregoing embodiments of the present disclosure.

According to yet another aspect of the embodiments of the present disclosure, an electronic device is provided, wherein the electronic device includes: a processor; and a memory configured to store processor-executable instructions, wherein the processor is configured to read the executable instructions from the memory and execute the instructions to implement the shortest path determining method according to any one of the foregoing embodiments of the present disclosure.

According to a still yet another aspect of the embodiments of the present disclosure, a computer program product is provided. When instructions in the computer program product are executed by a processor, the shortest path determining method according to any one of the foregoing embodiments is implemented.

According to the shortest path determining method and apparatus, the electronic device, and the storage medium provided in the foregoing embodiments of the present disclosure, the initial encounter node is determined through the forward search from the start node and the reverse search from the target node, so that the target shortest path from the start point to the target point is determined based on the initial encounter node. Because an encounter of searches in two directions can avoid exponential growth of expansion nodes in a middle part, spatiotemporal complexity of the search may be reduced and efficiency of determining a shortest path may be improved.

The technical solutions of the present disclosure are further described below in detail with reference to the accompanying drawings and the embodiments.

## BRIEF DESCRIPTION OF THE DRAWINGS

FIG. 1 is an exemplary application scenario of a shortest path determining method according to the present disclosure;
FIG. 2 is a schematic flowchart of a shortest path determining method according to an exemplary embodiment of the present disclosure;
FIG. 3 is a schematic flowchart of a shortest path determining method according to another exemplary embodiment of the present disclosure;
FIG. 4 is a schematic flowchart of a shortest path determining method according to still another exemplary embodiment of the present disclosure;
FIG. 5 is a schematic flowchart of step 203 according to an exemplary embodiment of the present disclosure;
FIG. 6 is a schematic flowchart of step 203 according to another exemplary embodiment of the present disclosure;
FIG. 7 is a schematic diagram of a structure of a shortest path determining apparatus according to an exemplary embodiment of the present disclosure;
FIG. 8 is a schematic diagram of a structure of a shortest path determining apparatus according to another exemplary embodiment of the present disclosure;
FIG. 9 is a schematic diagram of a structure of a shortest path determining apparatus according to still another exemplary embodiment of the present disclosure;
FIG. 10 is a schematic diagram of a structure of a second processing module 503 according to an exemplary embodiment of the present disclosure; and
FIG. 11 is a schematic diagram of a structure of an electronic device according to an application embodiment of the present disclosure.

## DETAILED DESCRIPTION OF THE EMBODIMENTS

Exemplary embodiments of the present disclosure are described below in detail with reference to the accompanying drawings. Obviously, the described embodiments are merely a part, rather than all of embodiments of the present disclosure. It should be understood that the present disclosure is not limited by the exemplary embodiments described herein.
It should be noted that unless otherwise specified, the scope of the present disclosure is not limited by relative arrangement, numeric expressions, and numerical values of components and steps described in these embodiments.

Overview of the present disclosure

In a process of implementing the present disclosure, the inventor finds that in scenarios such as path design, network planning, and circuit diagram design, it is usually needed to determine a path with lowest costs (that is, a shortest path) from a start point to a target point. In related technologies, a Floyd algorithm is usually used to determine a shortest path of a dense graph. However, the Floyd algorithm has high spatiotemporal complexity, resulting in low search efficiency.

Exemplary overview

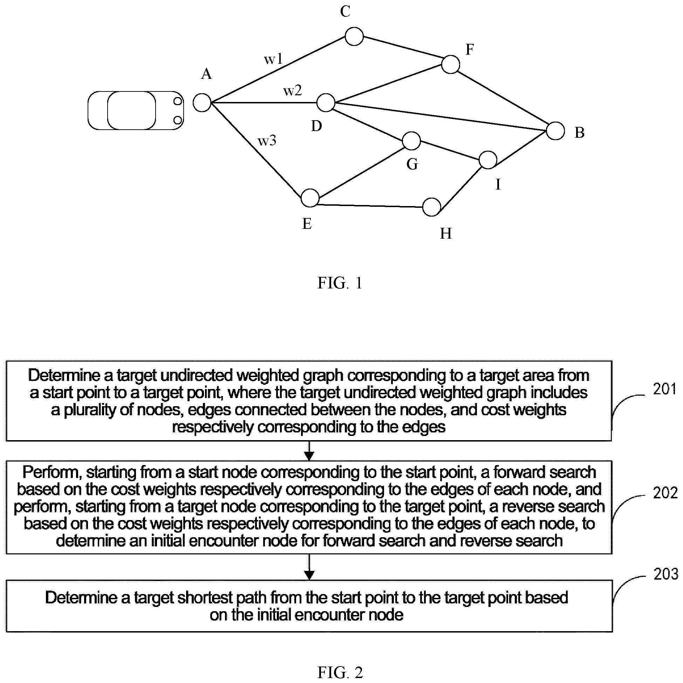

FIG. 1 is an exemplary application scenario of a shortest path determining method according to the present disclosure.
In a travel path planning scenario for a vehicle, for example, when the vehicle needs to reach a target point B in a city from a start point A in the city, a shortest path from A to B needs to be determined for vehicle travel. By using the shortest path determination method in the present disclosure, a target undirected weighted graph from A to B may be determined based on conditions about a road between the start point A and the target point B. The target undirected weighted graph includes a plurality of nodes (A-I), edges connected between the nodes, and cost weights ($w_i$, i=1, 2, ...) respectively corresponding to the edges. The node may be an intersection of two edges or may be another possible object; the edges connected between the nodes are roads; and the cost weight is a length of the road corresponding to the edge or is a value of the road length that is obtained through mapping. This may be specifically set according to actual requirements. After the target undirected weighted graph is determined, starting from a start node corresponding to the start point, a forward search may be performed based on the cost weights respectively corresponding to the edges of each node, and starting from a target node corresponding to the target point, a reverse search may be performed based on the cost weights respectively corresponding to the edges of each node, to determine an initial encounter node for the forward search and the reverse search. The initial encounter node refers to a current node, on which a reverse search has been performed, that is met for a first time during a forward search process, or refers to a current node, on which a forward search has been performed, that is met for a first time during a reverse search process. A target shortest path from the start point to the target point is determined based on the initial encounter node. Because an encounter of searches in two directions may avoid exponential growth of expansion nodes in a middle part, spatiotemporal complexity of the search may be reduced and efficiency of determining a shortest path may be improved.

Exemplary method

FIG. 2 is a schematic flowchart of a shortest path determining method according to an exemplary embodiment of the present disclosure. This embodiment may be applied to an electronic device such as a server or a terminal. As shown in FIG. 2, the method includes the following steps.

Step 201. Determine a target undirected weighted graph corresponding to a target area from a start point to a target point, wherein the target undirected weighted graph includes a plurality of nodes, edges connected between the nodes, and cost weights respectively corresponding to the edges.

The target area may be an actual physical spatial area (such as an area from a location A to a location B in a city), a circuit-diagram area, a network planning area, or the like. This may be specifically set according to actual requirements. The nodes in the undirected weighted graph represent preset objects that may be reached in the target area. The edges connected between the nodes represent the way in which the nodes are connected in the target area. The cost weight corresponding to each edge represents costs required to pass each edge.

For example, in the actual physical spatial area, each node in the undirected weighted graph represents a location at which roads are connected in the physical spatial area (such as a city); the edges connected between the nodes represent roads connecting various locations in the physical spatial area; and the cost weight corresponding to each edge represents a length of the road in the physical spatial area or a value of the road length that is obtained through mapping. An objective is to find a shortest path from a start location to a target location. In the network planning area, each node represents a network node in a network; each edge represents a data transmission channel connecting network nodes; and the cost weight represents costs (such as transmission time) required by the transmission channel to transmit data. An objective is to find a transmission path with lowest costs from a start network node to a target network node in the network. In the circuit-diagram area, each node represents a device in a circuit diagram; each edge represents a wire connecting devices; and the cost weight represents a wire length or resistance corresponding to the wire length. An objective is to find a circuit path with a shortest wire length or with smallest resistance from a start device to a target device. This may be specifically set according to actual requirements, and is not limited in the present disclosure.

Step 202. Perform, starting from a start node corresponding to the start point, a forward search based on the cost weights respectively corresponding to the edges of each node, and perform, starting from a target node corresponding to the target point, a reverse search based on the cost weights respectively corresponding to the edges of each node, to determine an initial encounter node for the forward search and the reverse search.

Search manners used for the forward search and the reverse search may be set according to actual requirements. For example, a breadth-first traversal manner is used. Taking the forward search as an example, for each search, a node with a shortest distance to the start node is determined from a current search range (excluding nodes that have been searched for, but including successor nodes of the nodes that have been searched for). The current search range is determined based on the successor nodes of the searched nodes, until the forward search encounters the reverse search, to obtain the initial encounter node. The initial encounter node is a node with a shortest distance to the start node within the current search range in a current forward search process, and is also a node with a shortest distance to the target node within a search range corresponding to a moment at which the initial encounter node is found in a reverse search process. In a practical search process, the initial encounter node may be determined in the forward search process, or may be determined in the reverse search process. This is determined based on an actual condition. The forward search and the reverse search may be performed concurrently or alternatively, which may be specifically set according to actual requirements. Performing searches alternatively may be performing the forward search once, performing the reverse search once, and then performing the forward search once again, and so on.

Step 203. Determine a target shortest path from the start point to the target point based on the initial encounter node.

In an optional example, after the initial encounter node is determined, the initial encounter node is the node with the shortest distance to the start node within the current search range in the current forward search process, and is also the node with the shortest distance to the target node within the search range corresponding to the moment at which the initial encounter node is found in the reverse search process. Therefore, to reduce search time, a shortest path from the initial encounter node to the start node may be combined with a shortest path from the initial encounter node to the target node, to serve as the target shortest path.

In another optional example, determining the initial encounter node in the forward search process is used as an example. The initial encounter node has been searched for in the reverse search process. After the initial encounter node is found in the reverse search, nodes may be constantly expanded during a subsequent reverse search process, and new expanded nodes may encounter the forward search again. Moreover, a shortest path, corresponding to the encounter node, from the start node to the target node is shorter than that of the initial encounter node. Therefore, after an initial encounter occurs, it is possible to continue searching for nodes within a current search range in a forward direction and nodes within a current search range in a reverse direction, to determine other encounter nodes. In this case, based on the initial encounter node and the other encounter nodes, a shortest path is determined as the target shortest path. Because there is no need to expand nodes during the process of continuing searches, no exponential growth may be generated for an expansion node.

According to the shortest path determining method provided in this embodiment of the present disclosure, the initial encounter node is determined through the forward search from the start node and the reverse search from the target node, so that the target shortest path from the start point to the target point is determined based on the initial encounter node. Because an encounter of searches in two directions may avoid exponential growth of expansion nodes in a middle part, spatiotemporal complexity of the search may be reduced and efficiency of determining a shortest path may be improved.

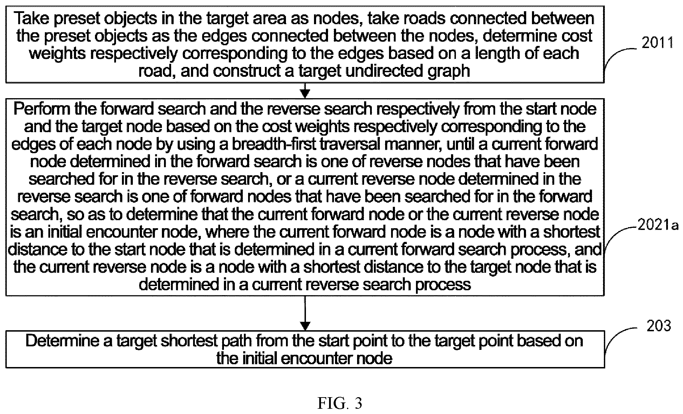

FIG. 3 is a schematic flowchart of a shortest path determining method according to another exemplary embodiment of the present disclosure.

In an optional example, step 202 may specifically include the following steps.

Step 2021a. Perform the forward search and the reverse search respectively from the start node and the target node based on the cost weights respectively corresponding to the edges of each node by using a breadth-first traversal manner, until a current forward node determined in the forward search is one of reverse nodes that have been searched for in the reverse search, or a current reverse node determined in the reverse search is one of forward nodes that have been searched for in the forward search, so as to determine that the current forward node or the current reverse node is the initial encounter node, wherein the current forward node is a node with a shortest distance to the start node that is determined in a current forward search process, and the current reverse node is a node with a shortest distance to the target node that is determined in a current reverse search process.

The breadth-first traversal manner may also be referred to as a sequential traversal manner or a horizontal traversal manner. For example, starting from the start node, all adjacent nodes (or successor nodes) of the start node are traversed first, and then successor nodes of each adjacent node are traversed. The others may be deduced by analogy, and details are not described. The current forward search process refers to traversing nodes within a current forward search range to determine a node with a shortest distance from the start node to serve as the current forward node. The current forward search range includes successor nodes (excluding searched forward nodes) of each searched node, and the searched forward nodes refer to nodes that are selected in a previous search process to serve as nodes with shortest distances from the start node. A principle of the reverse search is similar to that of the forward search, and details are not described herein.

In the present disclosure, the breadth-first traversal manner is adopted. During the search process, the node with the shortest distance to the start node or the target node is always selected from an expanded search range. In combination with the searches in two directions, searches for a large number of unnecessary nodes may be effectively reduced, so that a shortest path can be found faster.

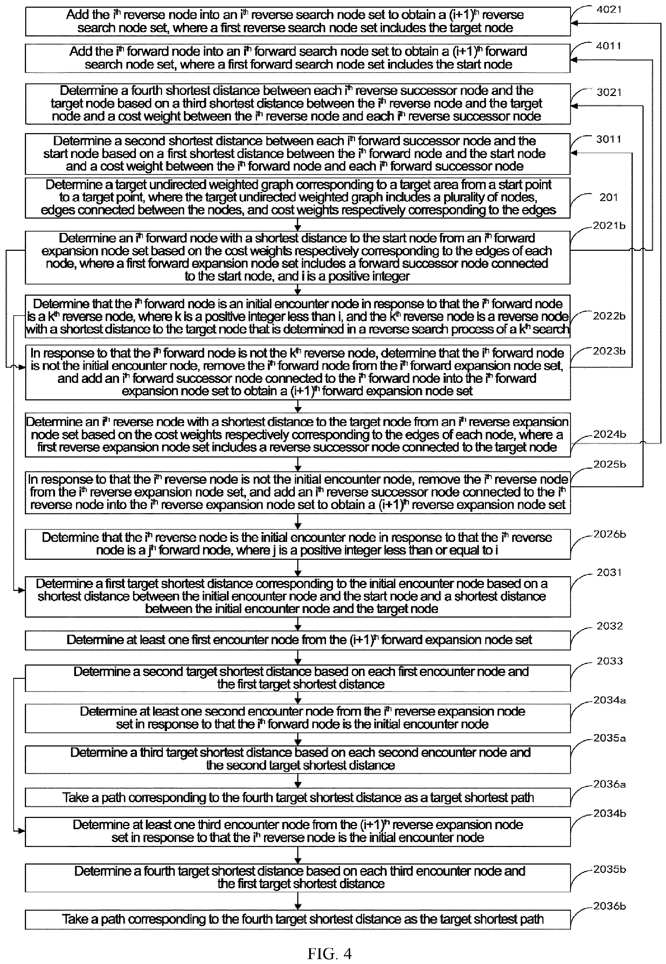

FIG. 4 is a schematic flowchart of a shortest path determining method according to still another exemplary embodiment of the present disclosure.

In an optional example, step 202 of performing, starting from the start node corresponding to the start point, a forward search based on the cost weights respectively corresponding to the edges of each node, and performing, starting from the target node corresponding to the target point, a reverse search based on the cost weights respectively corresponding to the edges of each node, to determine the initial encounter node for the forward search and the reverse search includes the following steps.

For an $i^{th}$ search, the following steps are performed.

Step 2021b. Determine an $i^{th}$ forward node with a shortest distance to the start node from an $i^{th}$ forward expansion node set based on the cost weights respectively corresponding to the edges of each node, wherein a first forward expansion node set includes a forward successor node connected to the start node, and i is a positive integer.

The $i^{th}$ forward expansion node set is a set of nodes that need to be traversed in the $i^{th}$ search, and includes forward successor nodes that are not searched for and respectively correspond to each node that has been searched for. For example, in a first search, all forward successor nodes of the start node are formed into the first forward expansion node set, and a first forward node with a shortest distance to the start node is determined from the first forward expansion node set. Subsequently, the first forward node becomes a node that has been searched for and is removed from the first forward expansion node set, and then, forward successor nodes of the first forward node are added into the first forward expansion node set to obtain a second forward expansion node set. In a next forward search, a second forward node with a shortest distance to the start node is determined from the second forward expansion node set. The others may be deduced by analogy, and details are not described. A distance between each node and the start node is determined by a sum of the cost weights of the edges along a path from the start node to the node. Because there may be more than one path from the start node to a certain node, it is needed to find a shortest path among a plurality of paths for each node. Shortest paths are compared with each other for various nodes to determine the node with the shortest path to the start node.

Optionally, during each search and traversal of nodes, a shortest distance from each node to the start node and a shortest path corresponding to the shortest distance may be recorded. In a subsequent search process, there is no need to calculate a node that has already participated in a previous search; and it is merely required to calculate, for a newly expanded node or when new paths are brought to other existing nodes due to the newly expanded node, a shortest distance from the newly expanded node to the start node and a corresponding shortest path.

Step 2022b. Determine that the $i^{th}$ forward node is the initial encounter node in response to that the $i^{th}$ forward node is a $k^{th}$ reverse node, wherein k is a positive integer less than i, and the $k^{th}$ reverse node is a reverse node with a shortest distance to the target node that is determined in a reverse search process of a $k^{th}$ search.

For the reverse search, a search principle is similar to that of the forward search, except that a node from which the search starts and a search direction are different. Details are not described herein. When the $i^{th}$ forward node is the $k^{th}$ reverse node, it indicates that the $i^{th}$ forward node has been searched for during the reverse search process, which is referred to as an encounter of the forward search and the reverse search. The $i^{th}$ forward node herein is a first $k^{th}$ reverse node met in the forward search process, and is referred to as the initial encounter node. In other words, before an $i^{th}$ forward search, no nodes on which the reverse search has been performed are found.

In the present disclosure, the initial encounter node is determined first, so that an initial shortest distance from the start node to the target node may be determined based on the initial encounter node, thereby providing a basis for reducing searches for unnecessary nodes in subsequent search processes.

In an optional example, step 202 further includes the following steps.

Step 2023b. In response to that the $i^{th}$ forward node is not the $k^{th}$ reverse node, determine that the $i^{th}$ forward node is not the initial encounter node, remove the $i^{th}$ forward node from the $i^{th}$ forward expansion node set, and add an $i^{th}$ forward successor node connected to the $i^{th}$ forward node into the $i^{th}$ forward expansion node set to obtain a $(i+1)^{th}$ forward expansion node set.

If the $i^{th}$ forward node is not a reverse node that has been searched for in the reverse search process, it indicates that the forward search and the reverse search have not yet met and searches need to be continued, that is, node expansion needs to be continued. Because the $i^{th}$ forward node becomes a node that has been searched for, searches are no longer required in the following. Therefore, the $i^{th}$ forward node needs to be removed from the $i^{th}$ forward expansion node set, and then node expansion is required to add the $i^{th}$ forward successor node(s) connected to the $i^{th}$ forward node into the $i^{th}$ forward expansion node set, to obtain the $(i+1)^{th}$ forward expansion node set.

For example, referring to FIG. 1, an $i^{th}$ forward successor node connected to a node E includes adjacent nodes G and H that are directly connected to the node E.

Step 2024b. Determine an $i^{th}$ reverse node with a shortest distance to the target node from an $i^{th}$ reverse expansion node set based on the cost weights respectively corresponding to the edges of each node, wherein a first reverse expansion node set includes a reverse successor node connected to the target node.

For specific operations of this step, reference may be made to step 2021b described above, and details are not described herein again.

Step 2025b. In response to that the $i^{th}$ reverse node is not the initial encounter node, remove the $i^{th}$ reverse node from the $i^{th}$ reverse expansion node set, and add an $i^{th}$ reverse successor node connected to the $i^{th}$ reverse node into the $i^{th}$ reverse expansion node set to obtain a $(i+1)^{th}$ reverse expansion node set.

For a specific operation principle of this step, reference may be made to step 2023b described above, and details are not described herein again.

Step 2026b. Determine that the $i^{th}$ reverse node is the initial encounter node in response to that the $i^{th}$ reverse node is a $j^{th}$ forward node, where j is a positive integer less than or equal to i.

For a specific operation principle of this step, reference may be made to step 2022b described above.

In the present disclosure, the initial encounter node can be determined more accurately by performing the forward search and the reverse search alternatively and combining the forward expansion node set and the reverse expansion node set. After the initial encounter occurs, there is no need to perform exponential node expansion, so that computational complexity is effectively reduced and search efficiency is improved.

In an optional example, step 203 of determining the target shortest path from the start point to the target point based on the initial encounter node includes the following steps.

Step 2031. Determine a first target shortest distance corresponding to the initial encounter node based on a shortest distance between the initial encounter node and the start node and a shortest distance between the initial encounter node and the target node.

The initial encounter node has a shortest distance to the start node and also has a shortest distance to the target node. Therefore, an entire distance from the start node to the target node may be obtained based on the shortest distances from the initial encounter node to the start node and to the target node to serve as the first target shortest distance. Moreover, a shortest path, from the start node to the target node, that corresponds to the first target shortest distance may be recorded.

For example, if the initial encounter node is represented by using v1, a shortest distance from v1 to the start node is represented by using $D_s(v1)$, and a shortest distance from v1 to the target node is represented by using $D_t(v1)$, the first target shortest distance is represented as:

$$minDis = D_s(v1) + D_t(v1)$$

Step 2032. Determine at least one first encounter node from the $(i+1)^{th}$ forward expansion node set.

The first encounter node is an encounter node except the initial encounter node. A determination manner is to continue searching the (i+1)$^{th}$ forward expansion node set to select a node with a shortest distance to the start node (which is, for example, represented by using p). If the node p has been performed the reverse search, it is determined that the node p is the first encounter node. The first encounter node p, and shortest distances and shortest paths from the first encounter node p to the start node and the target node may be recorded. The first encounter node is removed from the (i+1)$^{th}$ forward expansion node set to obtain a (i+2)$^{th}$ forward expansion node set, without performing node expansion. If the node p is not found through the reverse search, it indicates that the node p is not the first encounter node, and similarly, the node p is removed from the (i+1)$^{th}$ forward expansion node set to obtain the (i+2)$^{th}$ forward expansion node set. If the (i+2)$^{th}$ forward expansion node set is not empty, the foregoing process is repeated directly to search the (i+2)$^{th}$ forward expansion node set, until the (i+2)$^{th}$ forward expansion node set is empty. In this way, all first encounter nodes may be determined.

Step 2033. Determine a second target shortest distance based on each first encounter node and the first target shortest distance.

After each first encounter node is determined, an entire shortest distance, from the start node to the target node, that corresponds to each first encounter node may be determined according to a manner of the initial encounter node. For example, the entire shortest distance is represented as:

$$minDis2 = D_s(v2) + D_t(v2),$$

where $v2$ represents any first encounter node, $D_s(v2)$ represents a shortest distance between $v2$ and the start node, and $D_t(v2)$ represents a shortest distance between $v2$ and the target node. In this case, the second target shortest distance is a smallest one among $minDis$ and various $minDis2$.

Optionally, the second target shortest distance may be finally obtained by updating the first target shortest distance every time one first encounter node is determined. In other words, it is satisfied that $minDis' = min(minDis, D_s(v2) + D_t(v2))$. After all first encounter nodes are determined, $minDis'$ is the second target shortest distance. This may be specifically set according to actual requirements.

Step 2034a. Determine at least one second encounter node from the i$^{th}$ reverse expansion node set in response to that the i$^{th}$ forward node is the initial encounter node.

Because the forward search and the reverse search are performed alternatively, quantities of iterations for reverse expansion node sets are different when determining the initial encounter node in the forward search process and determining the initial encounter node in the reverse search process. The forward search is performed first. If it is determined that the i$^{th}$ forward node is the initial encounter node and the reverse search has not yet performed to the i$^{th}$ search, a reverse expansion node set at this time is the i$^{th}$ reverse expansion node set. A determining manner for the second encounter node is similar to that for the first encounter node. To be specific, a node with a shortest distance to the start node is selected from the i$^{th}$ reverse expansion node set, and is removed from the i$^{th}$ reverse expansion node set. If the node has been searched for in the forward search, it is determined that the node is a second encounter node, and an entire shortest distance and a shortest path that corresponds to the second encounter node are recorded. Further, remaining nodes in the i$^{th}$ reverse expansion node set are searched for according to the foregoing manner, and the others may be deduced by analogy. In this way, all second encounter nodes are determined.

Step 2035a. Determine a third target shortest distance based on each second encounter node and the second target shortest distance.

A smallest one among entire shortest distances respectively corresponding to all the second encounter nodes and the second target shortest distance is used as the third target shortest distance.

Step 2036a. Take a path corresponding to the third target shortest distance as the target shortest path.

During the search process, entire shortest distances respectively corresponding to all encounter nodes and corresponding shortest paths may be recorded in a real-time manner, and a specific recording manner is not limited. After the third target shortest distance is determined, a shortest path corresponding to the third target shortest distance may be directly obtained to serve as the target shortest path.

Alternatively, after step 2033, step 203 further includes the following steps.

Step 2034b. Determine at least one third encounter node from the (i+1)$^{th}$ reverse expansion node set in response to that the i$^{th}$ reverse node is the initial encounter node.

Step 2035b. Determine a fourth target shortest distance based on each third encounter node and the first target shortest distance.

Step 2036b. Take a path corresponding to the fourth target shortest distance as the target shortest path.

It should be noted that specific operation principles of steps 2034b-2036b are consistent with those of steps 2034a-2036a, with a difference only in quantities of iterations. Details are not described herein again.

In this example, searches start with the forward search. The forward search is first performed once and then the reverse search is performed once, and searches are performed in this way alternatively. In practical applications, searches may also start with the reverse search. This may be specifically set according to actual requirements.

In the present disclosure, there is no need to perform node expansion after the forward search encounters the reverse search. By determining other encounter nodes for a current forward expansion node set and a current reverse expansion node set, the target shortest path from the start node to the target node may be determined accurately and effectively. Moreover, at the initial encounter, an upper bound of the shortest path is determined, so that searches for the remaining nodes may be accelerated effectively.

In an optional example, after step 2023b of removing the $i^{th}$ forward node from the $i^{th}$ forward expansion node set, and adding the $i^{th}$ forward successor node connected to the $i^{th}$ forward node into the $i^{th}$ forward expansion node set to obtain the $(i+1)^{th}$ forward expansion node set, the method further includes:

Step 3011. Determine a second shortest distance between each $i^{th}$ forward successor node and the start node based on a first shortest distance between the $i^{th}$ forward node and the start node and a cost weight between the $i^{th}$ forward node and each $i^{th}$ forward successor node.

The first shortest distance is a shortest distance between the $i^{th}$ forward node and the start node. The first shortest distance may be stored after being determined in the $i^{th}$ search process. The $i^{th}$ forward successor node is a successor node of the $i^{th}$ forward node. When the first shortest distance of the $i^{th}$ forward node is determined, the second shortest distance between the $i^{th}$ forward successor node and the start node may be directly determined based on the first shortest distance and the cost weight corresponding to the edge between the $i^{th}$ forward successor node and the $i^{th}$ forward node. For example, the $i^{th}$ forward node is pi and has two $i^{th}$ forward successor nodes, that is, pi-1 and pi-2, and a cost weight between pi-1 and the $i^{th}$ forward node is w1, then the second shortest distance between pi-1 and the start node may be expressed as $D_s(pi - 1)' = min(D_s(pi - 1), D_s(pi)+ w1)$, where $D_s(pi - 1)$ represents a shortest distance, between the node and the start node, that is determined when the node is traversed during a previous search process. A node may be a successor node of a plurality of nodes, and during a previous search, the node is only traversed, but does not have a shortest distance and is not found. Therefore, the node may appear again in a subsequent search process for comparison. In the entire search process, for each node, a shortest distance between the node and the start node is recorded and is updated when there is a shorter distance. Thus, during the forward search process, the shortest distance between each node and the start node and a corresponding shortest path are maintained in a real-time manner for subsequent use.

After step 2025b of removing the $i^{th}$ reverse node from the $i^{th}$ reverse expansion node set, and adding the $i^{th}$ reverse successor node connected to the $i^{th}$ reverse node into the $i^{th}$ reverse expansion node set to obtain the $(i+1)^{th}$ reverse expansion node set, the method further includes:

Step 3021. Determine a fourth shortest distance between each $i^{th}$ reverse successor node and the target node based on a third shortest distance between the $i^{th}$ reverse node and the target node and a cost weight between the $i^{th}$ reverse node and each $i^{th}$ reverse successor node.

For a specific operation principle of this step, reference may be made to the forward successor node described above, and details are not described herein again.

In the present disclosure, during node expansion, a shortest distance between a newly extended successor node and the start node is maintained in a real-time manner based on a current node, to be used for subsequent searches, so that search efficiency may be further improved.

In an optional example, step 2021b of determining the $i^{th}$ forward node with the shortest distance to the start node from the $i^{th}$ forward expansion node set based on the cost weights respectively corresponding to the edges of each node includes:

determining the $i^{th}$ forward node with the shortest distance to the start node based on the second shortest distance between each forward successor node in the $i^{th}$ forward expansion node set and the start node.

When adding each forward successor node into a corresponding forward expansion node set in previous steps, the second shortest distance between each forward successor node and the start node is maintained in a real-time manner. Therefore, during searching, it is merely required to compare second shortest distances of various forward successor nodes in the $i^{th}$ forward expansion node set, and a forward successor node with a smallest second shortest distance is used as the $i^{th}$ forward node that is currently found.

Step 2024b of determining the $i^{th}$ reverse node with the shortest distance to the target node from the $i^{th}$ reverse expansion node set based on the cost weights respectively corresponding to the edges of each node includes:

determining the $i^{th}$ reverse node with the shortest distance to the target node based on the fourth shortest distance between each reverse successor node in the $i^{th}$ reverse expansion node set and the target node.

For a specific operation principle of this step, reference may be made to the $i^{th}$ forward node described above.

In this disclosure, because the shortest distance corresponding to each successor node in the expansion node set is maintained in a real-time manner, there is no need to calculate the shortest distance during the search process, thereby further improving the search efficiency.

In an optional example, after step 2021b of determining the $i^{th}$ forward node with the shortest distance to the start node from the $i^{th}$ forward expansion node set based on the cost weights respectively corresponding to the edges of each node, the method further includes:

Step 4011, adding the $i^{th}$ forward node into an

$i^{th}$ forward search node set to obtain a $(i+1)^{th}$ forward search node set, where a first forward search node set includes the start node.

The $i^{th}$ forward search node set includes forward nodes that haven been searched for in the forward search, thereby facilitating determining of an encounter node during the reverse search process.

After step of 2024b determining the $i^{th}$ reverse node with the shortest distance to the target node from the $i^{th}$ reverse expansion node set based on the cost weights respectively corresponding to the edges of each node, the method further includes:

Step 4021, adding the $i^{th}$ reverse node into an $i^{th}$ reverse search node set to obtain a $(i+1)^{th}$ reverse search node set, where a first reverse search node set includes the target node.

Step 2022b of determining that the $i^{th}$ forward node is the initial encounter node in response to that the $i^{th}$ forward node is the $k^{th}$ reverse node includes: determining that the $i^{th}$ forward node is the initial encounter node in response to that the $i^{th}$ forward node is in the $i^{th}$ reverse search node set.

Step 2026b of determining that the $i^{th}$ reverse node is the initial encounter node in response to that the $i^{th}$ reverse node is the $j^{th}$ forward node includes: determining that the $i^{th}$ reverse node is the initial encounter node in response to that the $i^{th}$ reverse node is in the $(i+1)^{th}$ forward search node set.

In the present disclosure, by maintaining the forward search node set and the reverse search node set in a real-time manner, during the search process, a current search node in a current direction (a forward direction or a reverse direction) may be compared with a search node set in the other direction, so that whether the current search node is an encounter node may be determined. In this way, determining of the encounter nodes is greatly facilitated and the search efficiency is further improved.

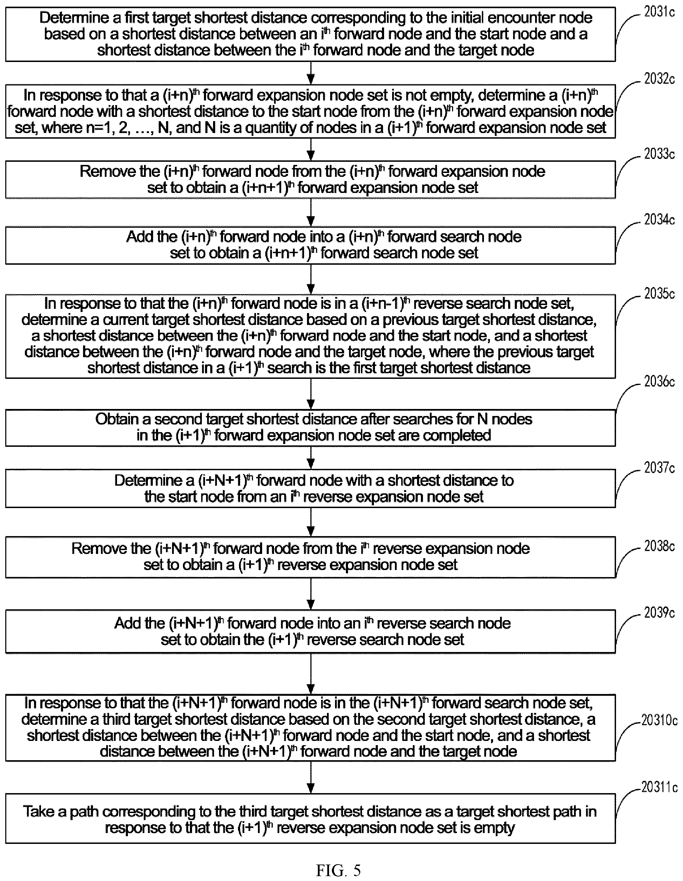

FIG. 5 is a schematic flowchart of step 203 according to an exemplary embodiment of the present disclosure.

In an optional example, in response to that the $i^{th}$ forward node is the initial encounter node, step 203 of determining the target shortest path from the start point to the target point based on the initial encounter node includes the following steps.

Step 2031c. Determine a first target shortest distance corresponding to the initial encounter node based on a shortest distance between the $i^{th}$ forward node and the start node and a shortest distance between the $i^{th}$ forward node and the target node.

For specific operations of this step, refer to the content described above, and details are not described herein again.

Step 2032c. In response to that a $(i+n)^{th}$ forward expansion node set is not empty, determine a $(i+n)^{th}$ forward node with a shortest distance to the start node from the $(i+n)^{th}$ forward expansion node set, where n= 1, 2,..., N, and N is a quantity of nodes in the $(i+1)^{th}$ forward expansion node set.

After the initial encounter, it is needed to continue searching the forward expansion node set and the reverse expansion node set at the time of the encounter. For example, when n=1, the $(i+1)^{th}$ forward expansion node set is searched and a $(i+1)^{th}$ node with a shortest distance to the start node is selected therefrom.

Step 2033c. Remove the $(i+n)^{th}$ forward node from the $(i+n)^{th}$ forward expansion node set to obtain a $(i+n+1)^{th}$ forward expansion node set.

If the $(i+n)^{th}$ forward node is determined, it indicates that this node has been searched for and there is no need to perform forward search on this node. Therefore, it is needed to remove the $(i+n)^{th}$ forward node from the $(i+n)^{th}$ forward expansion node set, to maintain the forward expansion node set in a real-time manner, thereby ensuring the search efficiency of the search process.

Step 2034c. Add the $(i+n)^{th}$ forward node into a $(i+n)^{th}$ forward search node set to obtain a $(i+n+1)^{th}$ forward search node set.

If the $(i+n)^{th}$ forward node is determined, it indicates that this node has been searched for. Therefore, it is needed to add the $(i+n)^{th}$ forward node into the $(i+n)^{th}$ forward search node set to maintain the forward search node set in a real-time manner.

Steps 2033c and 2034c are not in a sequential order.

Step 2035c. In response to that the $(i+n)^{th}$ forward node is in a $(i+n-1)^{th}$ reverse search node set, determine a current target shortest distance based on a previous target shortest distance, a shortest distance between the $(i+n)^{th}$ forward node and the start node, and a shortest distance between the $(i+n)^{th}$ forward node and the target node, where the previous target shortest distance in a $(i+1)^{th}$ search is the first target shortest distance.

That the $(i+n)^{th}$ forward node is in the $(i+n-1)^{th}$ reverse search node set indicates that the $(i+n)^{th}$ forward node is the first encounter node. Based on the first encounter node, a corresponding entire shortest distance from the start node to the target node via the first encounter node may be determined. A minimum value among entire shortest distances respectively corresponding to a plurality of first encounter nodes and the first target shortest distance of the initial encounter node is the current target shortest distance. The others may be deduced by analogy. After all first encounter nodes are completed, a second target shortest distance is obtained.

Step 2036c. Obtain a second target shortest distance after searches for N nodes in the $(i+1)^{th}$ forward expansion node set are completed.

Step 2037c. Determine a $(i+N+1)^{th}$ forward node with a shortest distance to the start node from an $i^{th}$ reverse expansion node set.

After the searches for N nodes in the $(i+1)^{th}$ forward expansion node set are completed, it is needed to continue searching for all nodes in the i^th reverse expansion node set to determine the second encounter node described above.

Step 2038c. Remove the (i+N+1)^th forward node from the i^th reverse expansion node set to obtain a (i+1)^th reverse expansion node set.

Step 2039c. Add the (i+N+1)^th forward node into an i^th reverse search node set to obtain the (i+1)^th reverse search node set.

Steps 2038c and 2039c are not in a sequential order.

Step 20310c. In response to that the (i+N+1)^th forward node is in the (i+N+1)^th forward search node set, determine a third target shortest distance based on the second target shortest distance, a shortest distance between the (i+N+1)^th forward node and the start node, and a shortest distance between the (i+N+1)^th forward node and the target node.

If the (i+N+1)^th forward node is in the (i+N+1)^th forward search node set, it is determined that the (i+N+1)^th forward node is the second encounter node described above. For determining of the third target shortest distance, reference made to the content described above.

Step 20311c. Take a path corresponding to the third target shortest distance as a target shortest path in response to that the (i+1)^th reverse expansion node set is empty.

In the present disclosure, the expansion node set, the search node set, the shortest distance between each forward node and the start node, and the shortest distance between each reverse node and the target node are maintained in a real-time manner, so that determining of the encounter nodes and determining of the entire shortest distance of each encounter node are facilitated, thereby ensuring that the obtained target shortest path is indeed a shortest path among all paths.

In an optional example, after determining the i^th forward node with the shortest distance to the start node based on the second shortest distance between each forward successor node in the i^th forward expansion node set and the start node, the method further includes: recording a shortest path between each i^th forward node and the start node, respectively.

During the search process, the shortest distance between each forward node and the start node has a corresponding shortest path. Recording a corresponding relationship between each shortest distance and shortest path in a real-time manner during the search process facilitates determining of a final target shortest path, thereby further improving efficiency of determining the shortest path.

After the determining the i^th reverse node with the shortest distance to the target node based on the fourth shortest distance between each reverse successor node in the i^th reverse expansion node set and the target node, the method further includes: recording a shortest path between each i^th reverse node and the target node, respectively.

Step 20311c of taking the path corresponding to the third target shortest distance as the target shortest path in response to that the (i+1)^th reverse expansion node set is empty includes: determining the target shortest path based on a shortest path between the start node and a target encounter node corresponding to the third target shortest distance and a shortest path between the target encounter node and the target node.

Specifically, the target shortest path is determined through a combination of the shortest path between the target encounter node and the start node and the shortest path between the target encounter node and the target node.

For example, referring to FIG. 1, if the target encounter node is a node D, a shortest path between the node D and a start node A is A-D, and a shortest path between the node D and the target node is D-B, then the target shortest path is A-D-B.

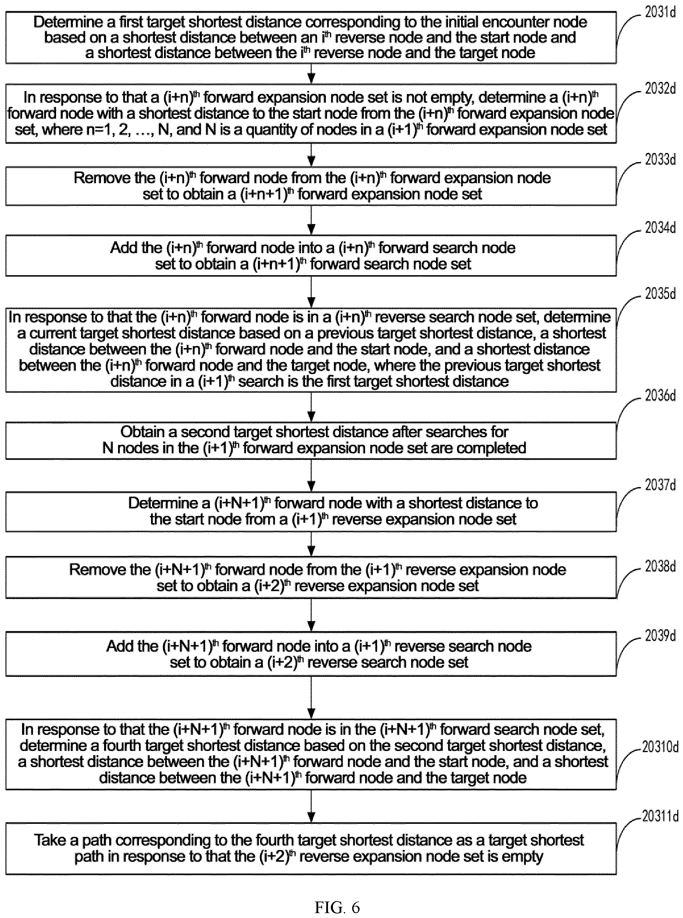

FIG. 6 is a schematic flowchart of step 203 according to another exemplary embodiment of this disclosure.

In an optional example, after the determining that the i^th reverse node is the initial encounter node in response to that the i^th reverse node is in the (i+1)^th forward search node set, step 203 of determining the target shortest path from the start point to the target point based on the initial encounter node includes the following steps.

Step 2031d. Determine a first target shortest distance corresponding to the initial encounter node based on a shortest distance between an i^th reverse node and the start node and a shortest distance between the i^th reverse node and the target node.

Step 2032d. In response to that a (i+n)^th forward expansion node set is not empty, determine a (i+n)th forward node with a shortest distance to the start node from the (i+n)^th forward expansion node set, where n=1, 2, ..., N, and N is a quantity of nodes in a (i+1)^th forward expansion node set.

Step 2033d. Remove the (i+n)^th forward node from the (i+n)^th forward expansion node set to obtain a (i+n+1)^th forward expansion node set.

Step 2034d. Add the (i+n)^th forward node into a (i+n)^th forward search node set to obtain a (i+n+1)^th forward search node set.

Step 2035d. In response to that the (i+n)^th forward node is in a (i+n)^th reverse search node set, determine a current target shortest distance based on a previous target shortest distance, a shortest distance between the (i+n)^th forward node and the start node, and a shortest distance between the (i+n)^th forward node and the target node, where the previous target shortest distance in a (i+1)^th search is the first target shortest distance.

Step 2036d. Obtain a second target shortest distance after searches for N nodes in the (i+1)^th forward expansion node set are completed.

Step 2037d. Determine a (i+N+1)^th forward node with a shortest distance to the start node from a $(i+1)^{th}$ reverse expansion node set.

Step 2038d. Remove the $(i+N+1)^{th}$ forward node from the $(i+1)^{th}$ reverse expansion node set to obtain a $(i+2)^{th}$ reverse expansion node set.

Step 2039d. Add the $(i+N+1)^{th}$ forward node into a $(i+1)^{th}$ reverse search node set to obtain a $(i+2)th$ reverse search node set.

Step 20310d. In response to that the $(i+N+1)^{th}$ forward node is in the $(i+N+1)^{th}$ forward search node set, determine a fourth target shortest distance based on the second target shortest distance, a shortest distance between the $(i+N+1)^{th}$ forward node and the start node, and a shortest distance between the $(i+N+1)^{th}$ forward node and the target node.

Step 20311d. Take a path corresponding to the fourth target shortest distance as a target shortest path in response to that the $(i+2)^{th}$ reverse expansion node set is empty.

It should be noted that specific operation principles of steps 2031d to 20311d are similar to those of steps 2031c to 20311c with a difference only in that the initial encounter node is determined during the reverse search process, which results in different iterations of the expansion node set and the search node set that are used for subsequent searches. Details are not described again.

In an optional example, step 201 of determining the target undirected weighted graph corresponding to the target area from the start point to the target point includes:

Step 2011. Take preset objects in the target area as nodes and take roads connected between the preset objects as the edges connected between the nodes, determine cost weights respectively corresponding to the edges based on a length of each road, and construct the target undirected graph.

The cost weight may be the length of the road, or may be a value obtained by mapping the road length to another range according to a certain mapping rule. For example, a road length of 0-200 meters is mapped to a range of 0-1 to serve as the cost weight. This may be specifically set according to actual requirements.

In the present disclosure, the determining of the shortest path of the target area is transformed into a problem about the shortest path of the undirected weighted graph, which facilitates the searches in two directions in the present disclosure, so that the required shortest path can be determined quickly and accurately.

In an optional example, each successor node (including the forward successor node of the forward node and the reverse successor node of the reverse node) of each node (including the forward node and the reverse node) corresponds to one edge connected to that node. Therefore, during the search process, the foregoing expansion node set and the search node set may also be replaced with an expansion edge set and a search edge set. In other words, the node expansion and the determining of the encounter node are implemented during the search process by maintaining the expansion edge set and the search edge set in a real-time manner. This may be specifically set according to actual requirements.

The foregoing embodiments or optional examples disclosed in this disclosure can be implemented separately or in any combination without conflict. This can be specifically set according to actual requirements, and is not limited in this disclosure.

Any shortest path determining method provided in the embodiments of the present disclosure may be implemented by any suitable device with a data processing capability, including but not limited to a terminal device and a server. Alternatively, any shortest path determining method provided in the embodiments of the present disclosure may be implemented by a processor. For example, the processor implements any shortest path determining method described in the embodiments of the present disclosure by invoking corresponding instructions stored in a memory. Details are not described below again.

Exemplary apparatus

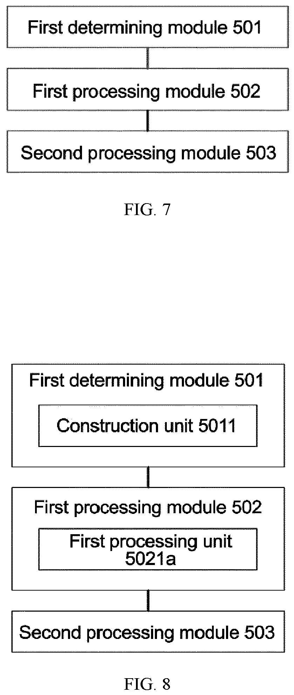

FIG. 7 is a schematic diagram of a structure of a shortest path determining apparatus according to an exemplary embodiment of the present disclosure. The apparatus in this embodiment may be configured to implement the corresponding method embodiments of the present disclosure. The apparatus shown in FIG. 7 includes a first determining module 501, a first processing module 502, and a second processing module 503.

The first determining module 501 is configured to determine a target undirected weighted graph corresponding to a target area from a start point to a target point, wherein the target undirected weighted graph includes a plurality of nodes, edges connected between the nodes, and cost weights respectively corresponding to the edges. The first processing module 502 is configured to perform, starting from a start node corresponding to the start point, a forward search based on the cost weights respectively corresponding to the edges of each node, and perform, starting from a target node corresponding to the target point, a reverse search based on the cost weights respectively corresponding to the edges of each node, to determine an initial encounter node for the forward search and the reverse search. The second processing module 503 is configured to determine a target shortest path from the start point to the target point based on the initial encounter node.

FIG. 8 is a schematic diagram of a structure of a shortest path determining apparatus according to another exemplary embodiment of the present disclosure.

In an optional example, the first processing module 502 includes a first processing unit 5021a that is configured to perform the forward search and the reverse search respectively from the start node and the target node based on the cost weights respectively corresponding to the edges of each node by using a breadth-first traversal manner, until a current forward node determined in the forward search is one of reverse nodes that have been searched for in the reverse search, or a current reverse node determined in the reverse search is one of forward nodes that have been searched for in the forward search, so as to determine that the current forward node or the current reverse node is the initial encounter node. The current forward node is a node with a shortest distance to the start node that is determined in the current forward search process, and the current reverse node is a node with a shortest distance to the target node that is determined in the current reverse search process.

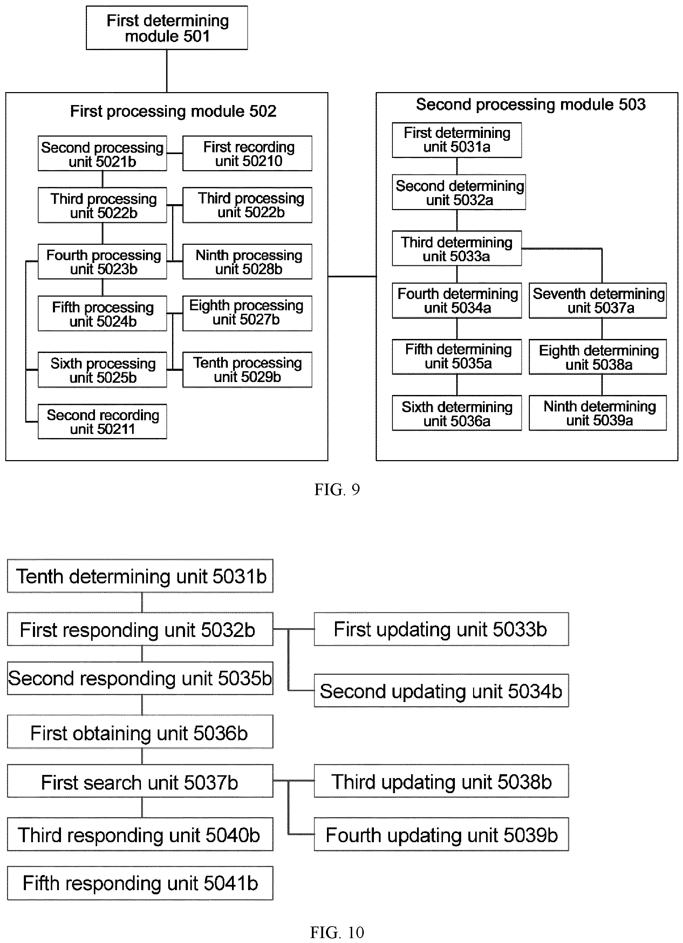

FIG. 9 is a schematic diagram of a structure of a shortest path determining apparatus according to still another exemplary embodiment of the present disclosure.

In an optional example, the first processing module 502 includes a second processing unit 5021b that is configured to perform the following steps for an $i^{th}$ search:

determining an $i^{th}$ forward node with a shortest distance to the start node from an $i^{th}$ forward expansion node set based on the cost weights respectively corresponding to the edges of each node, where a first forward expansion node set includes a forward successor node connected to the start node, and i is a positive integer; and determining that the $i^{th}$ forward node is the initial encounter node in response to that the $i^{th}$ forward node is a $k^{th}$ reverse node, where k is a positive integer less than i, and the $k^{th}$ reverse node is a reverse node with a shortest distance to the target node that is determined in a reverse search process of a $k^{th}$ search.

In an optional example, the first processing module 502 further includes:

a third processing unit 5022b, configured to, in response to that the $i^{th}$ forward node is not the $k^{th}$ reverse node, determine that the $i^{th}$ forward node is not the initial encounter node, remove the $i^{th}$ forward node from the $i^{th}$ forward expansion node set, and add an $i^{th}$ forward successor node connected to the $i^{th}$ forward node into the $i^{th}$ forward expansion node set to obtain a $(i+1)^{th}$ forward expansion node set; a fourth processing unit 5023b, configured to determine an $i^{th}$ reverse node with a shortest distance to the target node from an $i^{th}$ reverse expansion node set based on the cost weights respectively corresponding to the edges of each node, where a first reverse expansion node set includes a reverse successor node connected to the target node; a fifth processing unit 5024b, configured to, in response to that the $i^{th}$ reverse node is not the initial encounter node, remove the $i^{th}$ reverse node from the $i^{th}$ reverse expansion node set, and add an $i^{th}$ reverse successor node connected to the $i^{th}$ reverse node into the $i^{th}$ reverse expansion node set to obtain a $(i+1)^{th}$ reverse expansion node set; and a sixth processing unit 5025b, configured to determine that the $i^{th}$ reverse node is the initial encounter node in response to that the $i^{th}$ reverse node is a $j^{th}$ forward node, where j is a positive integer less than or equal to i.

In an optional example, the second processing module 503 includes:

a first determining unit 5031a, configured to determine a first target shortest distance corresponding to the initial encounter node based on a shortest distance between the initial encounter node and the start node and a shortest distance between the initial encounter node and the target node; a second determining unit 5032a, configured to determine at least one first encounter node from the $(i+1)^{th}$ forward expansion node set; a third determining unit 5033a, configured to determine a second target shortest distance based on each first encounter node and the first target shortest distance; a fourth determining unit 5034a, configured to determine at least one second encounter node from the $i^{th}$ reverse expansion node set in response to that the $i^{th}$ forward node is the initial encounter node; a fifth determining unit 5035a, configured to determine a third target shortest distance based on each second encounter node and the second target shortest distance; and a sixth determining unit 5036a, configured to take a path corresponding to the third target shortest distance as the target shortest path.

In an optional example, the second processing module 503 further includes:

a seventh determining unit 5037a, configured to determine at least one third encounter node from the $(i+1)^{th}$ reverse expansion node set in response to that the $i^{th}$ reverse node is the initial encounter node; an eighth determining unit 5038a, configured to determine a fourth target shortest distance based on each third encounter node and the first target shortest distance; and a ninth determining unit 5039a, configured to take a path corresponding to the fourth target shortest distance as the target shortest path.

In an optional example, the first processing module 502 further includes:

a seventh processing unit 5026b, configured to determine a second shortest distance between each $i^{th}$ forward successor node and the start node based on a first shortest distance between the $i^{th}$ forward node and the start node and a cost weight between the $i^{th}$ forward node and each $i^{th}$ forward successor node; and an eighth processing unit 5027b, configured to determine a fourth shortest distance between each $i^{th}$ reverse successor node and the target node based on a third shortest distance between the $i^{th}$ reverse node and the target node and a cost weight between the $i^{th}$ reverse node and each $i^{th}$ reverse successor node.

In an optional example, the second processing unit 5021b is specifically configured to determine the $i^{th}$ forward node with the shortest distance to the start node based on the second shortest distance between each forward successor node in the $i^{th}$ forward expansion node set and the start node. The fourth processing unit 5023b is specifically configured to determine the $i^{th}$ reverse node with the shortest distance to the target node based on the fourth shortest distance between each reverse successor node in the i<sup>th</sup> reverse expansion node set and the target node.

In an optional example, the first processing module 502 further includes:

a ninth processing unit 5028b, configured to add the i<sup>th</sup> forward node into an i<sup>th</sup> forward search node set to obtain a (i+1)<sup>th</sup> forward search node set, where a first forward search node set includes the start node; and a tenth processing unit 5029b, configured to add the i<sup>th</sup> reverse node into an i<sup>th</sup> reverse search node set to obtain a (i+1)<sup>th</sup> reverse search node set, where a first reverse search node set includes the target node. The second processing unit 5021b is specifically configured to determine that the i<sup>th</sup> forward node is the initial encounter node in response to that the i<sup>th</sup> forward node is in the i<sup>th</sup> reverse search node set. The sixth processing unit 5025b is specifically configured to determine that the i<sup>th</sup> reverse node is the initial encounter node in response to that the i<sup>th</sup> reverse node is in the (i+1)<sup>th</sup> forward search node set.

FIG. 10 is a schematic diagram of a structure of a second processing module 503 according to an exemplary embodiment of the present disclosure.

In an optional example, the second processing module 503 includes:

a tenth determining unit 5031b, configured to determine the first target shortest distance corresponding to the initial encounter node based on a shortest distance between the i<sup>th</sup> forward node and the start node and a shortest distance between the i<sup>th</sup> forward node and the target node; a first responding unit 5032b, configured to determine, in response to that a (i+n)<sup>th</sup> forward expansion node set is not empty, a (i+n)<sup>th</sup> forward node with a shortest distance to the start node from the (i+n)<sup>th</sup> forward expansion node set, where n=1, 2, ..., N, and N is a quantity of nodes in the (i+1)<sup>th</sup> forward expansion node set; a first updating unit 5033b, configured to remove the (i+n)<sup>th</sup> forward node from the (i+n)<sup>th</sup> forward expansion node set to obtain a (i+n+1)<sup>th</sup> forward expansion node set; a second updating unit 5034b, configured to add the (i+n)<sup>th</sup> forward node into a (i+n)<sup>th</sup> forward search node set to obtain a (i+n+1)<sup>th</sup> forward search node set; a second responding unit 5035b, configured to determine, in response to that the (i+n)<sup>th</sup> forward node is in a (i+n-1)<sup>th</sup> reverse search node set, a current target shortest distance based on a previous target shortest distance, a shortest distance between the (i+n)<sup>th</sup> forward node and the start node, and a shortest distance between the (i+n)<sup>th</sup> forward node and the target node, where the previous target shortest distance in a (i+1)<sup>th</sup> search is the first target shortest distance; a first obtaining unit 5036b, configured to obtain the second target shortest distance after searches for N nodes in the (i+1)<sup>th</sup> forward expansion node set are completed; a first search unit 5037b, configured to determine a (i+N+1)<sup>th</sup> forward node with a shortest distance to the start node from the i<sup>th</sup> reverse expansion node set; a third updating unit 5038b, configured to remove the (i+N+1)<sup>th</sup> forward node from the i<sup>th</sup>

reverse expansion node set to obtain a (i+1)<sup>th</sup> reverse expansion node set; a fourth updating unit 5039b, configured to add the (i+N+1)<sup>th</sup> forward node into the i<sup>th</sup> reverse search node set to obtain the (i+1)<sup>th</sup> reverse search node set; a third responding unit 5040b, configured to determine, in response to that the (i+N+1)<sup>th</sup> forward node is in the (i+N+1)<sup>th</sup> forward search node set, the third target shortest distance based on the second target shortest distance, a shortest distance between the (i+N+1)<sup>th</sup> forward node and the start node, and a shortest distance between the (i+N+1)<sup>th</sup> forward node and the target node; and a fifth responding unit 5041b, configured to take a path corresponding to the third target shortest distance as the target shortest path in response to that the (i+1)<sup>th</sup> reverse expansion node set is empty.

In an optional example, the first processing module 502 further includes:

a first recording unit 50210, configured to record a shortest path between each i<sup>th</sup> forward node and the start node, respectively; and a second recording unit 50211, configured to record a shortest path between each i<sup>th</sup> reverse node and the target node, respectively. The fifth responding unit 5041b is specifically configured to determine the target shortest path based on a shortest path between the start node and a target encounter node corresponding to the third target shortest distance, and a shortest path between the target encounter node and the target node.

In an optional example, referring to FIG. 10, the second processing module 503 includes:

a tenth determining unit 5031b, configured to determine the first target shortest distance corresponding to the initial encounter node based on a shortest distance between the i<sup>th</sup> reverse node and the start node and a shortest distance between the i<sup>th</sup> reverse node and the target node; a first responding unit 5032b, configured to determine, in response to that a (i+n)<sup>th</sup> forward expansion node set is not empty, a (i+n)<sup>th</sup> forward node with a shortest distance to the start node from the (i+n)<sup>th</sup> forward expansion node set, where n=1, 2, ..., N, and N is a quantity of nodes in the (i+1)<sup>th</sup> forward expansion node set; a first updating unit 5033b, configured to remove the (i+n)<sup>th</sup> forward node from the (i+n)<sup>th</sup> forward expansion node set to obtain a (i+n+1)<sup>th</sup> forward expansion node set; a second updating unit 5034b, configured to add the (i+n)<sup>th</sup> forward node into a (i+n)<sup>th</sup> forward search node set to obtain a (i+n+1)<sup>th</sup> forward search node set; a second responding unit 5035b, configured to determine, in response to that the (i+n)<sup>th</sup> forward node is in a (i+n)<sup>th</sup> reverse search node set, a current target shortest distance based on a previous target shortest distance, a shortest distance between the (i+n)<sup>th</sup> forward node and the start node, and a shortest distance between the (i+n)<sup>th</sup> forward node and the target node, where the previous target shortest distance in a (i+1)<sup>th</sup> search is the first target shortest distance; a first obtaining unit 5036b, configured to obtain the second target shortest distance after searches for N nodes in the (i+1)<sup>th</sup> forward expansion

node set are completed; a first search unit 5037b, configured to determine a $(i+N+1)^{th}$ forward node with a shortest distance to the start node from a $(i+n)^{th}$ reverse expansion node set; a third updating unit 5038b, configured to remove the $(i+N+1)^{th}$ forward node from the $(i+1)^{th}$ reverse expansion node set to obtain a $(i+2)^{th}$ reverse expansion node set; a fourth updating unit 5039b, configured to add the $(i+N+1)^{th}$ forward node into the $(i+1)^{th}$ reverse search node set to obtain a $(i+2)^{th}$ reverse search node set; a third responding unit 5040b, configured to determine, in response to that the $(i+N+1)^{th}$ forward node is in the $(i+N+1)^{th}$ forward search node set, the fourth target shortest distance based on the second target shortest distance, a shortest distance between the $(i+N+1)^{th}$ forward node and the start node, and a shortest distance between the $(i+N+1)^{th}$ forward node and the target node; and a fifth responding unit 5041b, configured to take a path corresponding to the fourth target shortest distance as the target shortest path in response to that the $(i+2)^{th}$ reverse expansion node set is empty.

In an optional example, the first determining module 501 includes:

a construction unit 5011, configured to take preset objects in the target area as nodes and take roads connected between the preset objects as the edges connected between the nodes, determine cost weights respectively corresponding to the edges based on a length of each road, and construct the target undirected graph.

Exemplary electronic device

An embodiment of the present disclosure further provides an electronic device, including: a memory, configured to store a computer program; and a processor, configured to execute the computer program stored in the memory, where when the computer program is executed, the method according to any one of the foregoing embodiments of the present disclosure is implemented.

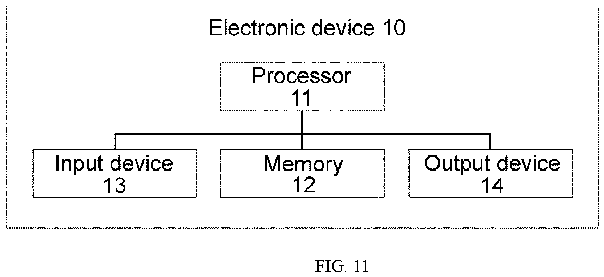

FIG. 11 is a schematic diagram of a structure of an electronic device according to an application embodiment of the present disclosure. In this embodiment, an electronic device 10 includes one or more processors 11 and a memory 12.

The processor 11 may be a central processing unit (CPU) or another form of processing unit having a data processing capability and/or an instruction execution capability, and may control another component in the electronic device 10 to perform a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the program instruction to implement the method according to various embodiments of the present disclosure that are described above and/or other desired functions. Various contents such as an input signal, a signal component, and a noise component may also be stored in the computer readable storage medium.

In an example, the electronic device 10 may further include an input device 13 and an output device 14. These components are connected to each other through a bus system and/or another form of connection mechanism (not shown).

For example, the input device 13 may be a microphone or a microphone array, which is configured to capture an input signal of a sound source.

In addition, the input device 13 may further include, for example, a keyboard and a mouse.

The output device 14 may output various information to the outside. The output device 14 may include, for example, a display, a speaker, a printer, a communication network, and a remote output device connected by the communication network.

Certainly, for simplicity, FIG. 11 shows only some of components in the electronic device 10 that are related to the present disclosure, and components such as a bus and an input/output interface are omitted. In addition, according to specific application situations, the electronic device 10 may further include any other appropriate components.

Exemplary computer program product and computer readable storage medium

In addition to the foregoing method and device, the embodiments of the present disclosure may also relate to a computer program product, which includes computer program instructions. When the computer program instructions are run by a processor, the processor is enabled to perform the steps, of the method according to the embodiments of the present disclosure, that are described in the "exemplary method" part of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, which stores computer program instructions. When the computer program instructions are run by the processor, the processor is enabled to perform the steps, of the method according to the embodiments of the present disclosure, that are described in the "exemplary method" part of this specification.

The computer readable storage medium may be one readable medium or any combination of a plurality of readable media. The computer readable medium may be a readable signal medium or a readable storage medium. The computer readable storage medium may include, for example, but is not limited to electricity, magnetism, light, electromagnetism, infrared ray, or a semiconductor system, apparatus, or device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, it should be pointed out that the advantages, superiorities, and effects mentioned in the present disclosure are merely examples but are not for limitation, and it cannot be considered that these advantages, superiorities, and effects are necessary for each embodiment of the present disclosure. In addition, specific details described above are merely for examples and for ease of understanding, rather than limitations. The details described above do not limit that the present disclosure must be implemented by using the foregoing specific details.

The various embodiments in this specification are all described in a progressive way, and each embodiment focuses on a difference from other embodiments. For same or similar parts among the various embodiments, reference may be made to each other. The system embodiments basically correspond to the method embodiments, and thus are relatively simply described. For related parts, reference may be made to a part of the descriptions of the method embodiments.

The method and the apparatus in the present disclosure may be implemented in many ways. For example, the method and the apparatus in the present disclosure may be implemented by software, hardware, firmware, or any combination of the software, the hardware, and the firmware. The foregoing sequence of the steps of the method is for illustration only, and the steps of the method in the present disclosure are not limited to the sequence specifically described above, unless otherwise specifically stated in any other manner. In addition, in some embodiments, the present disclosure may also be implemented as programs recorded in a recording medium. These programs include machine-readable instructions for implementing the method according to the present disclosure. Therefore, the present disclosure further relates to a recording medium storing a program for implementing the method according to the present disclosure.

The foregoing descriptions are given for illustration and description. In addition, the description is not intended to limit the embodiments of the present disclosure to forms disclosed herein. Although a plurality of exemplary aspects and embodiments have been discussed above, a person skilled in the art may recognize certain variations, modifications, changes, additions, and sub-combinations thereof.

## Claims

1. A shortest path determining method, comprising:

   determining (step 201) a target undirected weighted graph corresponding to a target area from a start point to a target point, wherein the target undirected weighted graph comprises a plurality of nodes, edges connected between the nodes, and cost weights respectively corresponding to the edges;
   performing (step 202), starting from a start node corresponding to the start point, a forward search based on the cost weights respectively corresponding to the edges of each node, and performing, starting from a target node corresponding to the target point, a reverse search based on the cost weights respectively corresponding to the edges of each node, to determine an initial encounter node for the forward search and the reverse search; and
   determining (step 203) a target shortest path from the start point to the target point based on the initial encounter node.

2. The method according to claim 1, wherein the performing (step 202), starting from a start node corresponding to the start point, a forward search based on the cost weights respectively corresponding to the edges of each node, and performing, starting from a target node corresponding to the target point, a reverse search based on the cost weights respectively corresponding to the edges of each node, to determine an initial encounter node for the forward search and the reverse search comprises:
   performing (step 2021a) the forward search and the reverse search respectively from the start node and the target node based on the cost weights respectively corresponding to the edges of each node by using a breadth-first traversal manner until a current forward node determined in the forward search is one of reverse nodes that have been searched for in the reverse search, or a current reverse node determined in the reverse search is one of forward nodes that have been searched for in the forward search, so as to determine that the current forward node or the current reverse node is the initial encounter node, wherein the current forward node is a node with a shortest distance to the start node that is determined in a current forward search process, and the current reverse node is a node with a shortest distance to the target node that is determined in a current reverse search process.

3. The method according to claim 1 or 2, wherein the performing (step 202), starting from a start node corresponding to the start point, a forward search based on the cost weights respectively corresponding to the edges of each node, and performing, starting from a target node corresponding to the target point, a reverse search based on the cost weights respectively corresponding to the edges of each node, to determine an initial encounter node for the forward search and the reverse search comprises:
for an $i^{th}$ search, performing the following steps:

determining (step 2021b) an $i^{th}$ forward node with a shortest distance to the start node from an $i^{th}$ forward expansion node set based on the cost weights respectively corresponding to the edges of each node, wherein a first forward expansion node set comprises a forward successor node connected to the start node, and i is a positive integer; and
determining (step 2022b) that the $i^{th}$ forward node is the initial encounter node in response to that the $i^{th}$ forward node is a $k^{th}$ reverse node, wherein k is a positive integer less than i, and the $k^{th}$ reverse node is a reverse node with a shortest distance to the target node that is determined in a reverse search process of a $k^{th}$ search.

4. The method according to claim 3, further comprising:

in response to that the $i^{th}$ forward node is not the $k^{th}$ reverse node, determining (step 2023b) that the $i^{th}$ forward node is not the initial encounter node, removing the $i^{th}$ forward node from the $i^{th}$ forward expansion node set, and adding an $i^{th}$ forward successor node connected to the $i^{th}$ forward node into the $i^{th}$ forward expansion node set to obtain a $(i+1)^{th}$ forward expansion node set;
determining (step 2024b) an $i^{th}$ reverse node with a shortest distance to the target node from an $i^{th}$ reverse expansion node set based on the cost weights respectively corresponding to the edges of each node, wherein a first reverse expansion node set comprises a reverse successor node connected to the target node;
in response to that the $i^{th}$ reverse node is not the initial encounter node, removing (step 2025b) the $i^{th}$ reverse node from the $i^{th}$ reverse expansion node set, and adding an $i^{th}$ reverse successor node connected to the $i^{th}$ reverse node into the $i^{th}$ reverse expansion node set to obtain a $(i+1)^{th}$ reverse expansion node set; and
determining (step 2026b) that the $i^{th}$ reverse node is the initial encounter node in response to that the $i^{th}$ reverse node is a $j^{th}$ forward node, wherein j is a positive integer less than or equal to i.

5. The method according to claim 4, wherein the determining (step 203) a target shortest path from the start point to the target point based on the initial encounter node comprises:

determining (step2031) a first target shortest distance corresponding to the initial encounter node based on a shortest distance between the initial encounter node and the start node and a shortest distance between the initial encounter node and the target node;
determining (step 2032) at least one first encounter node from the $(i+1)^{th}$ forward expansion node set;
determining (step 2033) a second target shortest distance based on each first encounter node and the first target shortest distance;
determining (step 2034a) at least one second encounter node from the $i^{th}$ reverse expansion node set in response to that the $i^{th}$ forward node is the initial encounter node;
determining (step 2035a) a third target shortest distance based on each second encounter node and the second target shortest distance;
taking (step 2036a) a path corresponding to the third target shortest distance as the target shortest path; or
determining (step 2034b) at least one third encounter node from the $(i+1)^{th}$ reverse expansion node set in response to that the $i^{th}$ reverse node is the initial encounter node;
determining (step 2035b) a fourth target shortest distance based on each third encounter node and the first target shortest distance; and
taking (step 2036b) a path corresponding to the fourth target shortest distance as the target shortest path.

6. The method according to claim 5, wherein after the removing (step 2023b) the $i^{th}$ forward node from the $i^{th}$ forward expansion node set, and adding an $i^{th}$ forward successor node connected to the $i^{th}$ forward node into the $i^{th}$ forward expansion node set to obtain a $(i+1)^{th}$ forward expansion node set, the method further comprises:

> determining (step 3011) a second shortest distance between each $i^{th}$ forward successor node and the start node based on a first shortest distance between the $i^{th}$ forward node and the start node and a cost weight between the $i^{th}$ forward node and each $i^{th}$ forward successor node; and after the removing (step 2025b) the $i^{th}$ reverse node from the $i^{th}$ reverse expansion node set, and adding an $i^{th}$ reverse successor node connected to the $i^{th}$ reverse node into the $i^{th}$ reverse expansion node set to obtain a $(i+1)^{th}$ reverse expansion node set, the method further comprises:
> determining (step 3021) a fourth shortest distance between each $i^{th}$ reverse successor node and the target node based on a third shortest distance between the $i^{th}$ reverse node and the target node and a cost weight between the $i^{th}$ reverse node and each $i^{th}$ reverse successor node.

7. The method according to claim 6, wherein the determining (step 2021b) an $i^{th}$ forward node with a shortest distance to the start node from an $i^{th}$ forward expansion node set based on the cost weights respectively corresponding to the edges of each node comprises:

> determining the $i^{th}$ forward node with the shortest distance to the start node based on the second shortest distance between each forward successor node in the $i^{th}$ forward expansion node set and the start node; and
> the determining (step 2024b) an $i^{th}$ reverse node with a shortest distance to the target node from an $i^{th}$ reverse expansion node set based on the cost weights respectively corresponding to the edges of each node comprises:
> determining the $i^{th}$ reverse node with the shortest distance to the target node based on the fourth shortest distance between each reverse successor node in the $i^{th}$ reverse expansion node set and the target node.

8. The method according to any one of claims 1 to 7, wherein the determining (step 201) a target undirected weighted graph corresponding to a target area from a start point to a target point comprises: taking (step 2011) preset objects in the target area as nodes and taking roads connected between the preset objects as the edges connected between the nodes, determining cost weights respectively corresponding to the edges based on a length of each road, and constructing the target undirected weighted graph.

9. A shortest path determining apparatus, **characterized in** comprising:

> a first determining module (501), configured to determine a target undirected weighted graph corresponding to a target area from a start point to a target point, wherein the target undirected weighted graph comprises a plurality of nodes, edges connected between the nodes, and cost weights respectively corresponding to the edges;
> a first processing module (502), configured to perform, starting from a start node corresponding to the start point, a forward search based on the cost weights respectively corresponding to the edges of each node, and perform, starting from a target node corresponding to the target point, a reverse search based on the cost weights respectively corresponding to the edges of each node, to determine an initial encounter node for the forward search and the reverse search; and
> a second processing module (503), configured to determine a target shortest path from the start point to the target point based on the initial encounter node.

10. The shortest path determining apparatus according to claim 9, wherein the first processing module (502) includes a first processing unit (5021a) that is configured to perform the forward search and the reverse search respectively from the start node and the target node based on the cost weights respectively corresponding to the edges of each node by using a breadth-first traversal manner, until a current forward node determined in the forward search is one of reverse nodes that have been searched for in the reverse search, or a current reverse node determined in the reverse search is one of forward nodes that have been searched for in the forward search, so as to determine that the current forward node or the current reverse node is the initial encounter node.

11. The shortest path determining apparatus according to claim 9 or 10, wherein the first processing module (502) includes a second processing unit (5021b) that is configured to perform the following steps for an $i^{th}$ search:
determining an $i^{th}$ forward node with a shortest distance to the start node from an ith forward expansion node set based on the cost weights respectively corresponding to the edges of each node, where a first forward expansion node set includes a forward successor node connected to the start node, and i is a positive integer; and determining that the $i^{th}$ forward node is the initial encounter node in response to that the $i^{th}$ forward node is a $k^{th}$ reverse node, where k is a positive integer less than i, and the $k^{th}$ reverse node is a reverse node with a shortest distance to the target node that is determined in a reverse search process of a $k^{th}$ search.

12. The shortest path determining apparatus according to claim 11, wherein the first processing module 502 further includes:

a third processing unit (5022b), configured to, in response to that the $i^{th}$ forward node is not the $k^{th}$ reverse node, determine that the $i^{th}$ forward node is not the initial encounter node, remove the $i^{th}$ forward node from the $i^{th}$ forward expansion node set, and add an $i^{th}$ forward successor node connected to the $i^{th}$ forward node into the $i^{th}$ forward expansion node set to obtain a $(i+1)^{th}$ forward expansion node set;

a fourth processing unit (5023b), configured to determine an $i^{th}$ reverse node with a shortest distance to the target node from an $i^{th}$ reverse expansion node set based on the cost weights respectively corresponding to the edges of each node, where a first reverse expansion node set includes a reverse successor node connected to the target node;

a fifth processing unit (5024b), configured to, in response to that the $i^{th}$ reverse node is not the initial encounter node, remove the $i^{th}$ reverse node from the $i^{th}$ reverse expansion node set, and add an $i^{th}$ reverse successor node connected to the $i^{th}$ reverse node into the $i^{th}$ reverse expansion node set to obtain a $(i+1)^{th}$ reverse expansion node set; and

a sixth processing unit (5025b), configured to determine that the $i^{th}$ reverse node is the initial encounter node in response to that the $i^{th}$ reverse node is a $j^{th}$ forward node, where j is a positive integer less than or equal to i.

13. The shortest path determining apparatus according to any one of claims 9 to 12, wherein the second processing module 503 includes:

a first determining unit (5031a), configured to determine a first target shortest distance corresponding to the initial encounter node based on a shortest distance between the initial encounter node and the start node and a shortest distance between the initial encounter node and the target node;

a second determining unit (5032a), configured to determine at least one first encounter node from the $(i+1)^{th}$ forward expansion node set;

a third determining unit (5033a), configured to determine a second target shortest distance based on each first encounter node and the first target shortest distance;

a fourth determining unit (5034a), configured to determine at least one second encounter node from the $i^{th}$ reverse expansion node set in response to that the $i^{th}$ forward node is the initial encounter node;

a fifth determining unit (5035a), configured to determine a third target shortest distance based on each second encounter node and the second target shortest distance; and

a sixth determining unit (5036a), configured to take a path corresponding to the third target shortest distance as the target shortest path.

14. A non-transitory computer readable storage medium, wherein the storage medium stores a computer program, and the computer program is used for implementing the shortest path determining method according to any one of claims 1 to 8.

15. An electronic device (10), wherein the electronic device (10) comprises:

a processor (11); and
a memory (12), configured to store processor-executable instructions,
wherein the processor is configured to read the executable instructions from the memory, and execute the instructions to implement the shortest path determining method according to any one of claims 1 to 8.

FIG. 1

Determine a target undirected weighted graph corresponding to a target area from a start point to a target point, where the target undirected weighted graph includes a plurality of nodes, edges connected between the nodes, and cost weights respectively corresponding to the edges — 201

Perform, starting from a start node corresponding to the start point, a forward search based on the cost weights respectively corresponding to the edges of each node, and perform, starting from a target node corresponding to the target point, a reverse search based on the cost weights respectively corresponding to the edges of each node, to determine an initial encounter node for forward search and reverse search — 202

Determine a target shortest path from the start point to the target point based on the initial encounter node — 203

FIG. 2

Take preset objects in the target area as nodes, take roads connected between the preset objects as the edges connected between the nodes, determine cost weights respectively corresponding to the edges based on a length of each road, and construct a target undirected graph

2011

Perform the forward search and the reverse search respectively from the start node and the target node based on the cost weights respectively corresponding to the edges of each node by using a breadth-first traversal manner, until a current forward node determined in the forward search is one of reverse nodes that have been searched for in the reverse search, or a current reverse node determined in the reverse search is one of forward nodes that have been searched for in the forward search, so as to determine that the current forward node or the current reverse node is an initial encounter node, where the current forward node is a node with a shortest distance to the start node that is determined in a current forward search process, and the current reverse node is a node with a shortest distance to the target node that is determined in a current reverse search process

2021a

Determine a target shortest path from the start point to the target point based on the initial encounter node

203

FIG. 3

Add the $i^{th}$ reverse node into an $i^{th}$ reverse search node set to obtain a $(i+1)^{th}$ reverse search node set, where a first reverse search node set includes the target node — 4021

Add the $i^{th}$ forward node into an $i^{th}$ forward search node set to obtain a $(i+1)^{th}$ forward search node set, where a first forward search node set includes the start node — 4011

Determine a fourth shortest distance between each $i^{th}$ reverse successor node and the target node based on a third shortest distance between the $i^{th}$ reverse node and the target node and a cost weight between the $i^{th}$ reverse node and each $i^{th}$ reverse successor node — 3021

Determine a second shortest distance between each $i^{th}$ forward successor node and the start node based on a first shortest distance between the $i^{th}$ forward node and the start node and a cost weight between the $i^{th}$ forward node and each $i^{th}$ forward successor node — 3011

Determine a target undirected weighted graph corresponding to a target area from a start point to a target point, where the target undirected weighted graph includes a plurality of nodes, edges connected between the nodes, and cost weights respectively corresponding to the edges — 201

Determine an $i^{th}$ forward node with a shortest distance to the start node from an $i^{th}$ forward expansion node set based on the cost weights respectively corresponding to the edges of each node, where a first forward expansion node set includes a forward successor node connected to the start node, and i is a positive integer — 2021b

Determine that the $i^{th}$ forward node is an initial encounter node in response to that the $i^{th}$ forward node is a $k^{th}$ reverse node, where k is a positive integer less than i, and the $k^{th}$ reverse node is a reverse node with a shortest distance to the target node that is determined in a reverse search process of a $k^{th}$ search — 2022b

In response to that the $i^{th}$ forward node is not the $k^{th}$ reverse node, determine that the $i^{th}$ forward node is not the initial encounter node, remove the $i^{th}$ forward node from the $i^{th}$ forward expansion node set, and add an $i^{th}$ forward successor node connected to the $i^{th}$ forward node into the $i^{th}$ forward expansion node set to obtain a $(i+1)^{th}$ forward expansion node set — 2023b

Determine an $i^{th}$ reverse node with a shortest distance to the target node from an $i^{th}$ reverse expansion node set based on the cost weights respectively corresponding to the edges of each node, where a first reverse expansion node set includes a reverse successor node connected to the target node — 2024b

In response to that the $i^{th}$ reverse node is not the initial encounter node, remove the $i^{th}$ reverse node from the $i^{th}$ reverse expansion node set, and add an $i^{th}$ reverse successor node connected to the $i^{th}$ reverse node into the $i^{th}$ reverse expansion node set to obtain a $(i+1)^{th}$ reverse expansion node set — 2025b

Determine that the $i^{th}$ reverse node is the initial encounter node in response to that the $i^{th}$ reverse node is a $j^{th}$ forward node, where j is a positive integer less than or equal to i — 2026b

Determine a first target shortest distance corresponding to the initial encounter node based on a shortest distance between the initial encounter node and the start node and a shortest distance between the initial encounter node and the target node — 2031

Determine at least one first encounter node from the $(i+1)^{th}$ forward expansion node set — 2032

Determine a second target shortest distance based on each first encounter node and the first target shortest distance — 2033

Determine at least one second encounter node from the $i^{th}$ reverse expansion node set in response to that the $i^{th}$ forward node is the initial encounter node — 2034a

Determine a third target shortest distance based on each second encounter node and the second target shortest distance — 2035a

Take a path corresponding to the fourth target shortest distance as a target shortest path — 2036a

Determine at least one third encounter node from the $(i+1)^{th}$ reverse expansion node set in response to that the $i^{th}$ reverse node is the initial encounter node — 2034b

Determine a fourth target shortest distance based on each third encounter node and the first target shortest distance — 2035b

Take a path corresponding to the fourth target shortest distance as the target shortest path — 2036b

FIG. 4

Determine a first target shortest distance corresponding to the initial encounter node based on a shortest distance between an $i^{th}$ forward node and the start node and a shortest distance between the $i^{th}$ forward node and the target node — 2031c

In response to that a $(i+n)^{th}$ forward expansion node set is not empty, determine a $(i+n)^{th}$ forward node with a shortest distance to the start node from the $(i+n)^{th}$ forward expansion node set, where n=1, 2, ..., N, and N is a quantity of nodes in a $(i+1)^{th}$ forward expansion node set — 2032c

Remove the $(i+n)^{th}$ forward node from the $(i+n)^{th}$ forward expansion node set to obtain a $(i+n+1)^{th}$ forward expansion node set — 2033c

Add the $(i+n)^{th}$ forward node into a $(i+n)^{th}$ forward search node set to obtain a $(i+n+1)^{th}$ forward search node set — 2034c

In response to that the $(i+n)^{th}$ forward node is in a $(i+n-1)^{th}$ reverse search node set, determine a current target shortest distance based on a previous target shortest distance, a shortest distance between the $(i+n)^{th}$ forward node and the start node, and a shortest distance between the $(i+n)^{th}$ forward node and the target node, where the previous target shortest distance in a $(i+1)^{th}$ search is the first target shortest distance — 2035c

Obtain a second target shortest distance after searches for N nodes in the $(i+1)^{th}$ forward expansion node set are completed — 2036c

Determine a $(i+N+1)^{th}$ forward node with a shortest distance to the start node from an $i^{th}$ reverse expansion node set — 2037c

Remove the $(i+N+1)^{th}$ forward node from the $i^{th}$ reverse expansion node set to obtain a $(i+1)^{th}$ reverse expansion node set — 2038c

Add the $(i+N+1)^{th}$ forward node into an $i^{th}$ reverse search node set to obtain the $(i+1)^{th}$ reverse search node set — 2039c

In response to that the $(i+N+1)^{th}$ forward node is in the $(i+N+1)^{th}$ forward search node set, determine a third target shortest distance based on the second target shortest distance, a shortest distance between the $(i+N+1)^{th}$ forward node and the start node, and a shortest distance between the $(i+N+1)^{th}$ forward node and the target node — 20310c

Take a path corresponding to the third target shortest distance as a target shortest path in response to that the $(i+1)^{th}$ reverse expansion node set is empty — 20311c

FIG. 5

Determine a first target shortest distance corresponding to the initial encounter node based on a shortest distance between an $i^{th}$ reverse node and the start node and a shortest distance between the $i^{th}$ reverse node and the target node ⟋ 2031d

In response to that a $(i+n)^{th}$ forward expansion node set is not empty, determine a $(i+n)^{th}$ forward node with a shortest distance to the start node from the $(i+n)^{th}$ forward expansion node set, where n=1, 2, …, N, and N is a quantity of nodes in a $(i+1)^{th}$ forward expansion node set ⟋ 2032d

Remove the $(i+n)^{th}$ forward node from the $(i+n)^{th}$ forward expansion node set to obtain a $(i+n+1)^{th}$ forward expansion node set ⟋ 2033d

Add the $(i+n)^{th}$ forward node into a $(i+n)^{th}$ forward search node set to obtain a $(i+n+1)^{th}$ forward search node set ⟋ 2034d

In response to that the $(i+n)^{th}$ forward node is in a $(i+n)^{th}$ reverse search node set, determine a current target shortest distance based on a previous target shortest distance, a shortest distance between the $(i+n)^{th}$ forward node and the start node, and a shortest distance between the $(i+n)^{th}$ forward node and the target node, where the previous target shortest distance in a $(i+1)^{th}$ search is the first target shortest distance ⟋ 2035d

Obtain a second target shortest distance after searches for N nodes in the $(i+1)^{th}$ forward expansion node set are completed ⟋ 2036d

Determine a $(i+N+1)^{th}$ forward node with a shortest distance to the start node from a $(i+1)^{th}$ reverse expansion node set ⟋ 2037d

Remove the $(i+N+1)^{th}$ forward node from the $(i+1)^{th}$ reverse expansion node set to obtain a $(i+2)^{th}$ reverse expansion node set ⟋ 2038d

Add the $(i+N+1)^{th}$ forward node into a $(i+1)^{th}$ reverse search node set to obtain a $(i+2)^{th}$ reverse search node set ⟋ 2039d

In response to that the $(i+N+1)^{th}$ forward node is in the $(i+N+1)^{th}$ forward search node set, determine a fourth target shortest distance based on the second target shortest distance, a shortest distance between the $(i+N+1)^{th}$ forward node and the start node, and a shortest distance between the $(i+N+1)^{th}$ forward node and the target node ⟋ 20310d

Take a path corresponding to the fourth target shortest distance as a target shortest path in response to that the $(i+2)^{th}$ reverse expansion node set is empty ⟋ 20311d

FIG. 6

First determining module 501

First processing module 502

Second processing module 503

FIG. 7

First determining module 501

Construction unit 5011

First processing module 502

First processing unit
5021a

Second processing module 503

FIG. 8

First determining
module 501

First processing module 502

| Second processing unit 5021b | First recording unit 50210 |
| Third processing unit 5022b | Third processing unit 5022b |
| Fourth processing unit 5023b | Ninth processing unit 5028b |
| Fifth processing unit 5024b | Eighth processing unit 5027b |
| Sixth processing unit 5025b | Tenth processing unit 5029b |
| Second recording unit 50211 | |

Second processing module 503

| First determining unit 5031a | |
| Second determining unit 5032a | |
| Third determining unit 5033a | |
| Fourth determining unit 5034a | Seventh determining unit 5037a |
| Fifth determining unit 5035a | Eighth determining unit 5038a |
| Sixth determining unit 5036a | Ninth determining unit 5039a |

FIG. 9

Tenth determining unit 5031b

First responding unit 5032b — First updating unit 5033b

Second responding unit 5035b — Second updating unit 5034b

First obtaining unit 5036b

First search unit 5037b — Third updating unit 5038b

Third responding unit 5040b — Fourth updating unit 5039b

Fifth responding unit 5041b

FIG. 10

Electronic device 10

Processor
11

Input device
13

Memory
12

Output device
14

FIG. 11

Europäisches
Patentamt

European
Patent Office

Office européen
des brevets

## EUROPEAN SEARCH REPORT

**Application Number**

EP 23 20 7783

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 192 314 B1 (KHAVAKH ASTA [US] ET AL) 20 February 2001 (2001-02-20) * abstract * ----- | 1,9,14, 15 | INV. G06Q10/047 G01C21/34 H04L45/12 |
| X | GB 2 443 472 A (COTARES LTD [GB]) 7 May 2008 (2008-05-07) * abstract; figures 7,8 * ----- | 1,9,14, 15 | |
| X | EP 1 335 315 A2 (UNIV TOKYO [JP]) 13 August 2003 (2003-08-13) * abstract * ----- | 1,9,14, 15 | |

**TECHNICAL FIELDS SEARCHED (IPC)**

G06Q
G01C
H04L

The present search report has been drawn up for all claims

| Place of search | Date of completion of the search | Examiner |
|---|---|---|
| The Hague | 1 March 2024 | Tabellion, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 7783

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2024

| Patent document cited in search report | | Publication date | Patent family member(s) | | Publication date |
|---|---|---|---|---|---|
| US 6192314 | B1 | 20-02-2001 | US | 6192314 B1 | 20-02-2001 |
| | | | US | 6298303 B1 | 02-10-2001 |
| | | | US | 2001047241 A1 | 29-11-2001 |
| | | | US | 2003028319 A1 | 06-02-2003 |
| | | | US | 2004039520 A1 | 26-02-2004 |
| GB 2443472 | A | 07-05-2008 | EP | 2084493 A1 | 05-08-2009 |
| | | | GB | 2443472 A | 07-05-2008 |
| | | | JP | 5448827 B2 | 19-03-2014 |
| | | | JP | 2010508531 A | 18-03-2010 |
| | | | US | 2010036606 A1 | 11-02-2010 |
| | | | WO | 2008053240 A1 | 08-05-2008 |
| EP 1335315 | A2 | 13-08-2003 | CA | 2418756 A1 | 12-08-2003 |
| | | | CN | 1459744 A | 03-12-2003 |
| | | | EP | 1335315 A2 | 13-08-2003 |
| | | | JP | 2003233768 A | 22-08-2003 |
| | | | KR | 20030068442 A | 21-08-2003 |
| | | | US | 2003223373 A1 | 04-12-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211381804